Europäisches Patentamt

European Patent Office

Office européen des brevets

(11) Veröffentlichungsnummer : **0 170 844**
**B1**

(12) # EUROPÄISCHE PATENTSCHRIFT

(45) Veröffentlichungstag der Patentschrift :
20.01.88

(51) Int. Cl.⁴ : **F 16 L 47/02,** F 16 L .47/00,
F 16 L 41/04

(21) Anmeldenummer : 85107620.8

(22) Anmeldetag : 20.06.85

(54) **Anbohrformstück aus schweissbarem Kunstoff.**

(30) Priorität : 08.08.84 CH 3811/84

(43) Veröffentlichungstag der Anmeldung :
12.02.86 Patentblatt 86/07

(45) Bekanntmachung des Hinweises auf die Patenterteilung : 20.01.88 Patentblatt 88/03

(84) Benannte Vertragsstaaten :
AT BE CH DE FR GB IT LI LU NL SE

(56) Entgegenhaltungen :
EP-A- 0 088 703
CH-A-   570 577
FR-A- 2 519 578
US-A- 3 891 247

(73) Patentinhaber : **GEORG FISCHER AKTIENGESELLS-
CHAFT**
**Mühlentalstrasse 105**
**CH-8201 Schaffhausen (CH)**

(72) Erfinder : **Thalmann, Alfred**
**Brunngasse 71**
**CH-8448 Uhwiesen (CH)**

## Beschreibung

Die Erfindung betrifft ein Anbohrformstück aus schweissbarem Kunststoff, wie es im Oberbegriff von Anspruch 1 gekennzeichnet ist.

Ein derartiges Anbohrformstück ist durch die CH-A-570577 bekanntgeworden, welches zwei schalenförmige Teile aufweist, die mittels eines Filmscharnieres gelenkig miteinander verbunden sind, aber herstellungsmässig eine Einheit bilden. Zum Aufsetzen des Anbohrformstückes auf eine in einem Graben verlegte Rohrleitung muss das untere schalenförmige Teil sehr weit aufgebogen werden oder das Formstück muss von der Seite auf das Rohr aufgeschoben werden, wobei dann auf der gegenüberliegenden Seite eine Zange zum Zusammendrücken der beiden Schalen beim Schweissvorgang angesetzt wird.

Dies erfordert seitlich des Rohrleitungsstranges einen genügend grossen, freien Raum, so dass ein grösserer Erdaushub erforderlich ist als er nur für die Rohrleitung nötig wäre. Ein rationelleres bzw. mechanisiertes Aufsetzen und Verschweissen dieser Anbohrformstücke auf eine Rohrleitung ist kaum möglich. Nachteilig ist bei verschiedenen Ausführungen, dass die Drähte der Heizmatte beim Anbohrvorgang mit dem für Kunststoff konzipierten Bohr- bzw. Fräswerkzeug mit durchgetrennt werden müssen, und dass für die Umlenkung des Durchflussmediums in die Abzweigleitung keine besonders strömungsgünstige Ausgestaltung vorgesehen ist.

Aufgabe der vorliegenden Erfindung ist die Schaffung eines Anbohrformstückes der eingangs genannten Art, welches einstückig so ausgebildet ist, dass es radial z. B. von oben auf die Rohrleitung aufsetzbar ist, eine fast vollständige umfangsmässige Schweissverbindung mit dem Rohr ermöglicht, wobei das Aufsetzen und Befestigen auf der Rohrleitung bei geringem Platzbedarf rationell gewährleistet und mit geeigneten Mitteln automatisierbar sein soll.

Erfindungsgemäss wird dies durch die kennzeichnenden Merkmale von Anspruch 1 gelöst.

Besonders vorteilhafte Ausgestaltungen der Erfindung sind in den abhängigen Ansprüchen gekennzeichnet.

Die Erfindung ist beispielsweise in den beiliegenden Zeichnungen dargestellt und nachfolgend beschrieben.

Es zeigen:

Fig. 1 ein Anbohrformstück im Querschnitt vor dem Aufsetzen auf eine Rohrleitung,

Fig. 2 das Anbohrformstück gemäss Fig. 1 mit der Rohrleitung verschweisst,

Fig. 3 ein Schnitt entlang der Linie III-III von Fig. 2 und

Fig. 4 eine Draufsicht auf die Heizmatte im flachgelegten Zustand.

Das Anbohrformstück 1 weist einen Anbohrstutzen 2, einen Abzweigstutzen 3 und ein U-förmig ausgebildetes Sattelstück 4 mit zwei Schenkeln 5 auf. Der Anbohrstutzen 2 ist mit einem Innengewinde 6 zur Aufnahme eines Anbohrwerkzeuges 7, oder eines Verschlussstopfens, und mit einem Aussengewinde 8 zum Aufschrauben einer Verschlusskappe 9 versehen. Der Abzweigstutzen 3 ist zum Anschliessen einer weiter nicht dargestellten Abzweigleitung z. B. mittels einer Schweissverbindung ausgebildet und weist eine Bohrung 22 für das Durchflussmedium auf.

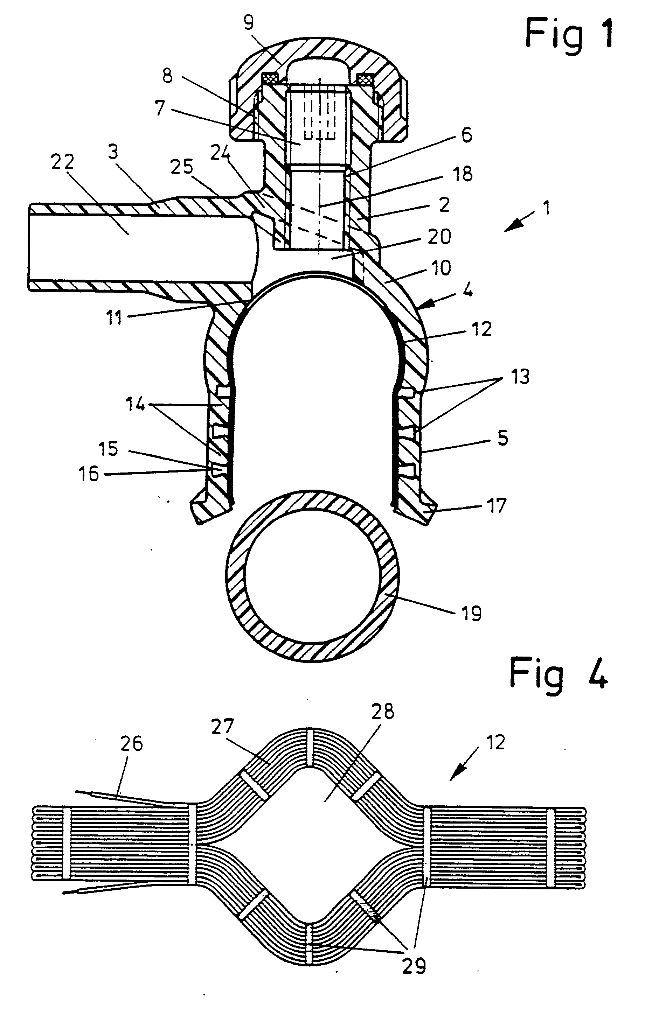

Der obere schalenförmige Teil 10 des Sattelstückes 4 weist einen teilkreiszylinderförmigen Innenumfang 11 auf, welcher sich über einen Umfangswinkel von etwas mehr als 180° erstreckt. Der Umfangswinkel wird so gewählt, dass das Formstück 1 mit einer an der Innenfläche 11 angeordneten Heizmatte 12 federnd auf die Rohrleitung 19 aufgesteckt werden kann, wobei es durch die Schnappwirkung auf der Rohrleitung gehalten wird. Bei der dargestellten Ausführungsform wurde ein Umfangswinkel von ca. 210° gewählt. Die beiden Schenkel 5 sind gelenkig bzw. biegsam mit dem schalenförmigen Teil 10 verbunden, wobei jeder im Aufsetzzustand gemäss Fig. 1 annähernd geradlinig und symmetrisch zur Anbohrachse verlaufende Schenkel durch Gelenke 13 verbundene Teilpartien 14 aufweist. Je nach Rohrdurchmesser weist jeder Schenkel zwei oder mehr solcher Teilpartien 14 auf. Die Gelenke 13 sind als Filmscharniere ausgebildet und werden durch jeweils eine schwalbenschwanzförmige Längsnute 15 und einen dünnen Steg 16 gebildet. Die dargestellte Ausführung mit einem Filmscharnier ermöglicht eine rationelle einstückige Herstellung des Anbohrformstückes aus Kunststoff im Spritzgussverfahren. Am freien Ende jedes Schenkels 5 ist ein nach aussen abstehender Spannflansch 17 angeordnet.

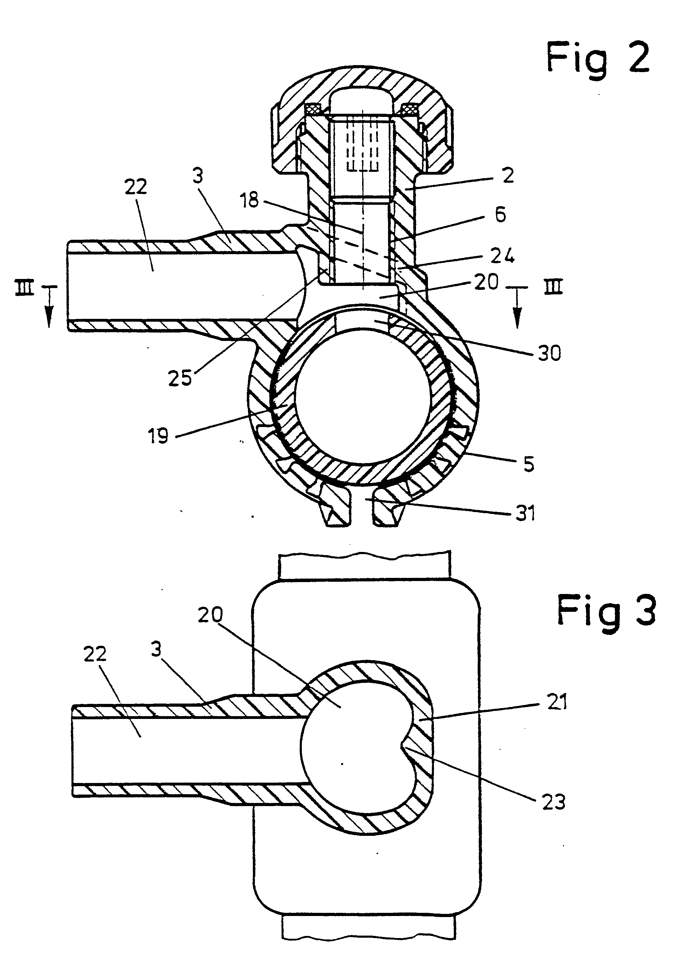

Zwischen dem Anbohrstutzen 2 und dem Abzweigstutzen 3 ist im Sattelstück 4 eine strömungsgünstig geformte, zum Innenumfang 11 des Sattelstückes 4, offene Kammer 20 angeordnet. Die Kammer 20 ist im Schnitt quer zur Anbohrachse 18 gemäss Fig. 3 im wesentlichen rund ausgebildet, wobei der runde Querschnitt gegenüber dem Abzweigstutzen 3 eine Abflachung 21 aufweist, an welcher eine auf die Achsmitte der Bohrung 22 gerichtete Strömungsnase 23 angeordnet ist.

Gemäss Fig. 1 oder 2 ist die Kammer 20 ausgehend von der Oberkante der Bohrung 22 des Abzweigstutzens 3 durch eine geneigte, bis zur Abflachung 21 verlaufende, obere Kammerwand 24 begrenzt.

Der Anbohrstutzen 2 ragt mit seinem unteren Ende 25 etwas in die Kammer 20 hinein, wodurch das Innengewinde 6 einen geraden Abschluss aufweist und relativ nahe bis zur Anbohrstelle an die Rohrleitung heranreicht.

Fig. 4 zeigt eine flachgelegte Heizdrahtmatte 12, welche aus einer zick-zack-förmigen Anordnung eines mit Kunststoff ummantelten Heizdrahtes 26 besteht. Die aneinander liegenden Heizdrähte werden nach dem monofilen Wickeln einer rechteckförmigen Matte in einem, vorzugsweise mittigen Bereich in der Mattenebene so abgebogen, dass durch zwei bogenförmige Teile 27 eine Oeffnung 28 entsteht. Die nebeneinander liegenden Heizdrähte 26 werden durch quer dazu verlaufende geschweisste Streifen 29 miteinander verbunden. Die Heizdrahtmatte 12 ist so in das Sattelstück 4 eingelegt, dass deren Oeffnung 28 im Bereich der späteren Anbohrung 30 der Rohrleitung 19 zu liegen kommt. Vorzugsweise wird die Heizdrahtmatte 12 am Sattelstück 4 in deren Scheitellinie beidseits der Kammer 20 durch eine Schweissung befestigt. Durch die monofile Wicklung der Heizdrahtmatte 12 werden Kurzschlüsse vermieden.

Wie aus Fig. 1 ersichtlich, wird das Anbohrformstück 1 mit dem U-förmigen Sattelstück 4 und der entsprechend gebogenen Heizdrahtmatte 12 radial auf die Rohrleitung 19 aufgesteckt. Anschliessend werden die beiden Schenkel 5 zusammen mit der Heizdrahtmatte 12 an den restlichen Rohrumfang angelegt und mittels einer an den Spannflanschen 17 angreifenden Spannzange oder einer Spannvorrichtung tangential gegen das Rohr gedrückt, wobei der Anpressdruck auch bei dem nachfolgenden Schweissvorgang aufrechterhalten wird, so dass sich der zwischen den Enden der Schenkel vorhandene Spalt 31 etwas verringert. Die tangentiale Kraft erzeugt eine am Umfang wirkende Spannung, welche die radial wirkende Pressung zwischen Sattelstück, Heizmatte und Rohr ergibt, wodurch während der Schweissung der nötige Schmelzdruck erzeugt wird. Nach dem Schweissvorgang wird durch das Anbohrwerkzeug 7 die Anbohrung 30 in der Rohrleitung 19 erzeugt und die Abzweigleitung kann am Abzweigstutzen durch z. B. ebenfalls eine Schweissverbindung angeschlossen werden. Durch die ausserhalb der Kammeröffnung liegenden Heizdrähte ist deren Durchschneiden beim Anbohren nicht erforderlich, wodurch der Schneidevorgang wesentlich vereinfacht wird.

Das durch die Anbohrung 30 austretende Durchflussmedium wird in der Kammer 20 strömungsgünstig in die Abzweigleitung umgelenkt.

Das radiale Aufsetzen des Anbohrformstückes benötigt um die Rohrleitung wenig Platz und erfordert somit weniger Erdaushub. Das Aufsetzen kann durch ein entsprechendes Werkzeug zusammen mit dem nachfolgenden Anpressen wesentlich vereinfacht und auch mit entsprechenden Geräten automatisiert werden. Stehen entsprechend geeignete Hilgsgeräte zur Verfügung, so kann von oberhalb des Grabens, ohne dass ein Arbeiter in diesen einsteigen muss, gearbeitet werden. Dadurch wird das Erstellen von Abzweigleitungen an bereits verlegten Rohrleitungen bei gleicher oder besserer Qualität der Verbindung wesentlich vereinfacht und verbilligt.

**Patentansprüche**

1. Anbohrformstück (1) aus schweissbarem Kunststoff zum Anschluss mindestens einer Abzweigleitung an eine, aus schweissbarem Kunststoff bestehende Rohrleitung (19) mit einem radial auf die Rohrleitung aufsetzbaren schalenförmigen Sattelstück (4), welches einen Anbohr- und Abzweigstutzen (2, 3) aufweist, mit mindestens einer, gelenkig am Sattelstück angeordneten, an das Rohrstück angelegten Partie (14), wobei das Anbohrformstück mit einer zwischenliegenden Heizdrahtmatte (12) durch Schweissung mit der Rohrleitung verbindbar ist, dadurch gekennzeichnet, dass das Sattelstück (4) U-förmig ausgebildet ist, wobei jeder Schenkel (5) mit Gelenken (13) verbundene Teilpartien (14) aufweist, welche einen axialen Spalt (31) bildend zusammen mit der Heizdrahtmatte (12) an die Rohrleitung (19) andrückbar sind.

2. Anbohrformstück nach Anspruch 1, dadurch gekennzeichnet, dass das U-förmige Sattelstück (4) symmetrisch zur Anbohrachse (18) ausgebildet ist.

3. Anbohrformstück nach Anspruch 1 oder 2, dadurch gekennzeichnet, dass jeder Schenkel (5) mindestens zwei, mittels Filmscharnieren (13) gelenkig miteinander und mit dem Sattelstück (4) verbundene, annähernd gleich lange Teilpartien (14) aufweist.

4. Anbohrformstück nach Anspruch 3, dadurch gekennzeichnet, dass das Filmscharnier (13) durch eine schwalbenschwanzförmige Längsnut (15) und einem dünnen Steg (16) gebildet ist.

5. Anbohrformstück nach einem der Ansprüche 1 bis 4, dadurch gekennzeichnet, dass zwischen dem Anbohrstutzen (2) und dem Abzweigstutzen (3) im Sattelstück (4) eine strömungsgünstig geformte, zum Innenumfang (11) des Sattelstückes (4), offene Kammer (20) angeordnet ist.

6. Anbohrformstück nach Anspruch 5, dadurch gekennzeichnet, dass die Kammer (20) im Schnitt quer zur Anbohrachse (18) im wesentlichen rund ausgebildet ist und gegenüber dem Abzweigstutzen (3) eine Abflachung (21) mit einer Strömungsnase (23) aufweist.

7. Anbohrformstück nach einem der Ansprüche 5 oder 6, dadurch gekennzeichnet, dass die Kammer (20) quer zur Rohrleitungsachse ausgehend vom Abzweigstutzen (3) durch eine geneigte Kammerwand (24) begrenzt ist.

8. Anbohrformstück nach einem der Ansprüche 1 bis 7, dadurch gekennzeichnet, dass die Heizdrahtmatte (12) durch eine bogenförmige Verlegung der Heizdrähte (26) im Bereich der Kammer (20) eine Oeffnung (28) aufweist.

9. Anbohrformstück nach Anspruch 8, dadurch gekennzeichnet, dass die Heizdrahtmatte (12) am Sattelstück (4) im Scheitelbereich beidseits der Kammer (20) befestigt ist.

**Claims**

1. Drilling member (1) made from weldable plastic for the connection of at least one branch line to a pipeline (19) made from weldable plastic and having a dish-shaped saddle (4) which can be radially mounted on the pipeline and which has a drilling and branch connection (2, 3), with at least one portion (14) arranged in articulated manner on the saddle and applied to the pipe section, the drilling member with an interposed heating wire mat (12) being connectable by welding to the pipeline, characterized in that the saddle (4) is U-shaped, each leg (5) having portions (14) connected by joints (13) and which, forming an axial gap (31), can be pressed together with the heating wire mat (12) onto the pipeline (19).

2. Drilling member according to claim 1, characterized in that the U-shaped saddle (4) is constructed symmetrically to the drilling axis (18).

3. Drilling member according to claims 1 or 2, characterized in that each leg (5) has at least two roughly identically long portions (14) interconnected in articulated manner by film hinges (13) and connected to the saddle (4).

4. Drilling member according to claim 3, characterized in that the film hinge (13) is formed by a dovetailed spline (15) and a thin web (16).

5. Drilling member according to one of the claims 1 to 4, characterized in that a flow-favourably shaped chamber (20) open towards the inner circumference (11) of saddle (4) is formed in the latter between drilling connection (2) and branch connection (3).

6. Drilling member according to claim 5, characterized in that in section at right angles to the drilling axis (18), chamber (20) is substantially round and opposite to the branch connection (3) has a flattened portion (21) with a flow nose (23).

7. Drilling member according to one of the claims 5 or 6, characterized in that starting from the branch connection (3) and at right angles to the pipeline axis, chamber (20) is bounded by a sloping chamber wall (24).

8. Drilling member according to one of the claims 1 to 7, characterized in that the heating wire mat (12) has an opening (28) in the vicinity of chamber (20) through an arcuate laying of the heating wires (26).

9. Drilling member according to claim 8, characterized in that the heating wire mat (12) is fixed to saddle (4) in the vertical region on either side of chamber (20).

**Revendications**

1. Pièce de picage profilée (1) en matière plastique soudable, pour raccorder au moins une conduite d'embranchement à une conduite tubulaire en matière plastique soudable (19), comportant une pièce de chevauchement (4) en forme de cuvette qui peut être emboîtée radialement sur la conduite tubulaire et qui présente une tubulure de picage et une tubulure d'embranchement (2, 3), ainsi qu'au moins une portion (14) agencée de manière articulée sur la pièce de chevauchement et appliquée sur la pièce tubulaire, la pièce de picage profilée pouvant être assemblée par soudage à la conduite tubulaire au moyen d'un mat intercalaire (12) doté d'un fil chauffant, caractérisée par le fait que la pièce de chevauchement (4) est en forme de U dont chaque aile (5) présente des portions (14) qui sont reliées par des articulations (13) et peuvent être serrées sur la conduite tubulaire (19), conjointement avec le mat (12) à fil chauffant, en formant un interstice axial (31).

2. Pièce de picage profilée selon revendication 1, caractérisée par le fait que la pièce de chevauchement en forme de U (4) est symétrique par rapport à l'axe de perçage (18).

3. Pièce de chevauchement selon revendication 1 ou 2, caractérisée par le fait que chaque aile (5) présente des portions (14) de longueurs à peu près égales, assemblées à la pièce de chevauchement (4) et entre elles de manière articulée au moyen de charnières à film (13).

4. Pièce de picage profilée selon revendication 3, caractérisée par le fait que la charnière à film (13) est formée par une rainure longitudinale (15) à profil en queue d'aronde et par une âme mince (16).

5. Pièce de picage profilée selon l'une quelconque des revendications 1 à 4, caractérisée par le fait qu'une chambre (20) ouverte vers la périphérie intérieure (11) de la pièce de chevauchement (4) et dotée d'une forme favorisant l'écoulement est aménagée dans la pièce de chevauchement (4), entre la tubulure de picage (2) et la tubulure d'embranchement (3).

6. Pièce de picage profilée selon revendication 5, caractérisée par le fait que, en coupe perpendiculaire à l'axe de perçage (18), la chambre (20) présente une forme sensiblement ronde et comporte, en face de la tubulure d'embranchement (3), un aplatissement (21) avec un nez déflecteur (23).

7. Pièce de picage profilée selon l'une quelconque des revendications 5 ou 6, caractérisée par le fait que, transversalement à l'axe de la conduite tubulaire, en partant de la tubulure d'embranchement (3), la chambre (20) est délimitée par une paroi inclinée (24).

8. Pièce de picage profilée selon l'une quelconque des revendications 1 à 7, caractérisée par le fait que, grâce à une disposition en forme d'arc des fils chauffants (26), le mat à fil chauffant (12) présente une ouverture (28) dans la région de la chambre (20).

9. Pièce de picage profilée selon revendication 8, caractérisée par le fait que le mat à fil chauffant (12) est fixé à la pièce de chevauchement (4) dans la région du sommet des deux côtés de la chambre (20).

Fig 1

Fig 4

Fig 2

Fig 3